# EUROPEAN PATENT APPLICATION

(11) **EP 4 439 143 A1**
(43) Date of publication of application: **02.10.2024**
(21) Application number: 23165725.5
(22) Date of filing: 30.03.2023
(51) Int. Cl.: G02B 6/44

(54) **CLAMPING STRUCTURE FOR FIBER OPTIC CABLES**

(71) Applicant: Hitachi Energy Ltd, 8050 Zürich (CH)
(72) Inventor: Sengul, Fuat, 77154 Ludvika (SE); Vinnberg, Andreas, 77132 Ludvika (SE)
(74) Representative: AWA Sweden AB

(57) **Abstract**

This disclosure presents a clamping structure, comprising a pair of opposed jaws having an open state and a clamped state, and an electrically conductive deformable element, arranged between the jaws. The electrically conductive deformable element is configured to receive a fiber optic cable when the jaws are in the open state and deform around and thereby sandwich a fiber optic cable when the jaws are in the clamped state, wherein the clamping structure is configured to be electrically connected to a controlled potential. A system comprising the clamping structure is also presented.

## Description

### TECHNICAL FIELD

The present disclosure generally relates to the field of fiber optic cables, and more particularly to a clamping structure for terminating leakage current from fiber optic cables.

### BACKGROUND

Fiber optic cables are used to transmit data via light pulses and usually comprise at least one glass fiber core covered with a cladding of an optically insulating material.

When connecting a fiber optic cable between units with a high voltage difference, there is a risk of electrical current leakage propagating from the outer surface of the fiber optic cable. While it may not affect the signal travelling within the fiber optic cable, the leakage current may harm the units or surrounding devices, leading to equipment damage, if not terminated suitably.

There is thus a desire for proper prevention and termination of such leakage currents from fiber optic cables.

### SUMMARY

It is in view of the above considerations and others that the embodiments of the present invention have been made.

That is, it is an object of the present disclosure to provide a clamping structure for terminating leakage current in fiber optic cables.

It is a further object of the present disclosure to provide a system comprising such a clamping structure for terminating leakage current in fiber optic cables.

More particularly, according to an aspect of the present disclosure there is provided a clamping structure, comprising a pair of opposed jaws having an open state and a clamped state, and an electrically conductive deformable element, arranged between the jaws and configured to receive a fiber optic cable when the jaws are in the open state and deform around, and thereby sandwich, a fiber optic cable when the jaws are in the clamped state, wherein the clamping structure is configured to be electrically connected to a controlled potential.

Put another way, the electrically conductive deformable element of the above-described clamping structure may, when force is applied by/to the opposed jaws, deform around the fiber optic cable, thus sandwiching the fiber optic cable therebetween. As used herein, 'sandwiching' the fiber optic cable may be interpreted as clamping, holding, gripping, clasping, securing or otherwise retaining the fiber optic cable in a manner that enhances the surface contact between the fiber optic cable and the electrically conductive deformable element.

Leakage current is typically found on the outer surface (or 'shell') of the fiber optic cable. Thus, by providing an element that is both deformable and electrically conductive, the surface area of connection - and thus the quality of electrical connection - between said element and the fiber optic cable can be greatly enhanced. Accordingly, when the clamping structure is clamped around the fiber optic cable, the leakage current can travel from the shell thereof to the controlled potential, i.e., via the deformable element and, in some cases, the jaws and/or other components of the clamping structure.

Therefore, the leakage current from a fiber optic cable can be properly terminated by implementation of a clamping structure according to the present aspects, thus reducing the risk of damage to the units between which the fiber optic cable is connected.

The pair of opposed jaws may comprise any type of rigid material capable of imparting a suitable force to thereby deform the deformable element around the fiber optic cable. The jaws may be electrically conductive, preferably being made from a metal, or from another suitable electrically conductive material. The jaws may then be connected to a controlled potential, i.e., via a wire. Optionally, the pair of opposed jaws may comprise a hard plastic, or another electrically insulating material. If the pair of opposed jaws are made out of an electrically insulating material, or a material with low electrical conductivity, the deformable element may be connected to the controlled potential by alternative means, e.g., directly via a wire or similar connector, and not via the pair of opposed jaws, e.g., by electrical contact to the jaws.

Accordingly, the pair of opposed jaws may be made out of any suitable material, providing electrical conductivity or electrical insulation. The primary function of the opposed jaws is to provide pressure and/or force on to the deformable element, such that the deformable element may deform around the optic fiber cable.

The electrically conductive deformable element (alternatively referred to as the deformable element throughout the present disclosure) may be in direct contact with the jaws or otherwise arranged so that an electrical connection between the jaws and the deformable element is established. Alternatively, no electrical connection is needed between the pair of opposed jaws and the deformable element (i.e., if the jaws are electrically insulating as discussed above). However, if the jaws are electrically conductive, the electrically conductive deformable element may be connected to a controlled potential via the pair of opposed jaws.

The jaws, and thus the clamping structure, may be formed as any type of conventional clamp, e.g., a spring clamp, scissor clamp, or other functionally similar structures. The pair of opposed jaws may be electrically and/or mechanically connected and controllable.

The pair of opposed jaws have an open state and a closed or 'clamped' state. In the open state of the pair of opposed jaws, substantially no, or very little, force is applied to the electrically conductive deformable element, such that the electrically conductive deformable element may readily receive a fiber optic cable, e.g., in an opening therein that opens when the jaws are opened. In other words, in use, the fiber optic cable may be arranged in the clamping structure when the opposed jaws are in the open state.

In the closed state of the opposed jaws, force is applied to the deformable element by the pair of opposed jaws, causing the electrically conductive deformable element to deform around the fiber optic cable. The force may be applied by mechanically forcing the jaws together, by spring force, screws or other suitable means.

The fiber optic cable may, in some examples, be sandwiched between a bare jaw and deformable element, i.e., one of the pair of opposed jaws may apply force directly on the fiber optic cable (i.e., without the electrically conductive deformable element as an intermediate element), pushing it down into the deformable element. The deformable element will thereby deform, allowing for the fiber optic cable to be at least partly surrounded by the deformable element. In the case that the deformable element is not fully surrounding around the fiber optic cable, the fiber optic cable may nonetheless be sufficiently in contact with the jaws as well as the deformable element so as to ensure good electrical contact between the external surface of the fiber optic cable and the clamping structure.

The deformable element may be formed as one piece and arranged between the jaws so that the deformable element may be folded or squeezed around the fiber optic cable by the jaws and the fiber optic cable may then be in contact with the deformable element substantially on all sides. This could be achieved by e.g., the deformable element being suitably dimensioned for such folding, or by the deformable element being shaped to receive the fiber optic cable in an opening, aperture, or the like.

That is, the electrically conductive deformable element may deform to fully or partly surround the fiber optic cable. In other words, depending on the shape or form of the clamping structure, or the shape or form of the electrically conductive deformable element, the fiber optic cable may, in the clamped state of the opposed jaws, only be in contact with the deformable element. Alternatively, the fiber optic cable may, in the clamped state of the opposed jaws, be in contact with both the deformable element and one or both of the opposed jaws.

The clamping structure is connected to a controlled potential, i.e., via the deformable element and/or the jaws. Hence, the electrical connection of the outer surface of the fiber optic cable to the deformable element allows for a leakage current to flow from the fiber optic cable to the deformable element.

The controlled potential may be for example chassis ground, protective ground or any other type of controlled potential suitable for terminating or minimizing leakage current. Hence, the connection to a controlled potential may terminate the leakage current by the redirection of the leakage current through the deformable element.

The electrically conductive deformable element may, in some examples, be formed as a plurality of deformable elements. In one example, the electrically conductive element may be formed as two deformable elements. In other words, the clamping structure may comprise two deformable elements. Each of the deformable elements may be fixedly or removably attached to a respective jaw. In the clamped state of the pair of opposed jaw the fiber optic cable may then be sandwiched between the two deformable elements.

In a further example, each of the plurality of deformable elements may have a sloped surface forming an apex, and the plurality of deformable elements are arranged such that each respective apex meets when the jaws are in the clamped state. For example, the deformable elements may be formed as polygons and brought together such that a point or corner thereof is incident upon the fiber optic cable. Hence, an increased pressure may be applied to the fiber optic cable by the deformable elements.

In a further example, the clamping structure may comprise two deformable elements, each of the deformable elements fixedly or removably attached to each of the pair of opposed jaws respectively, wherein the sloped surface of each of the deformable elements are arranged towards the other.

At least one of the jaws may form part of a device chassis. That is, the pair of opposed jaws may be formed as one moveable part that clamps onto a static integral part of a device chassis. Hence, the clamping structure may be integrated into the structure of a device chassis, i.e., the device chassis that the fiber optic cable is connected to.

The deformable element may have a conductivity at least 10 times higher, and preferably at least 1000 times higher, and even more preferably 100 000 times higher than the fiber optic cable shell. The deformable element may be configured so as to possess this property of conductivity at substantially all relevant temperatures, levels of humidity and levels of surface contamination expected during the operation lifetime of the clamping structure.

The deformable element may be made from a single material possessing qualities of both conductivity and deformability, or the deformable element may be made from a combination of two or more materials. In the latter case, the materials comprised in the deformable element may be combined in any suitable way for providing a preferred electrical conductivity and preferred degree of deformation (semi-rigidness, softness). Accordingly, for example, the deformable element may comprise a first material for providing electrical conductivity and a second material for providing deformability. The first material may fill the second material, be coated on the second material, or be dispersed throughout the second material, depending on the implementation.

The deformable element may comprise any type of metal, rubber or a polymeric material. In one example, the deformable may element comprise a conductive polymer, preferably a conductive elastomer.

In an example, the deformable element may comprise a conductive polymer formed of particles with a higher conductivity dispersed throughout a polymer with a lower (or substantially no) conductivity.

In one example, these conductive particles may be ceramic particles, metal oxide, carbon black or any other type of similarly conductive particles, and the polymer may be a rubber or other polymeric material.

The deformable element may be held in place between the opposed jaws by one or more of force applied by the jaws, adhesive, or conductive fasteners. The deformable element may be held in place in a way that ensures reliable contact between the electrically conductive deformable element and the opposed jaws. By keeping the deformable element in place by force applied by the jaws, it can be ensured that the connection therebetween is kept while the pair of opposed jaws are in their clamped state, while allowing for an ease of removal or replacement of the deformable element when the jaws are in the open state.

In some examples, adhesive may be used to keep the deformable element fixedly attached to the pair of opposed jaws during both the open state and the closed state of the opposed jaws. Preferably, in such examples, electrically conductive adhesive is used to ensure maximized conductive contact surface between the deformable element and the opposed jaws.

Conductive fastener, e.g., conductive tape or other fastening means allowing for the deformation of the deformable element may be used in combination with or as an alternative to adhesive.

The deformable element may be configured to receive a plurality of spaced apart fiber optic cables when the jaws are in the open state and deform around and thereby sandwich each of the plurality of spaced apart fiber optic cables when the jaws are in the clamped state.

The plurality of fiber optic cables may preferably be spaced apart allowing for each individual fiber optic cable within the plurality of fiber optic cables to be at least partly surrounded by the deformable element. The plurality of fiber optic cables may preferably be spaced apart so that each individual fiber optic cable of the plurality of fiber optic cables do not touch each other, such that the contact surface area between the electrically conductive deformable element and each individual fiber optic cable is maximized. Thus, a single clamping structure may advantageously be used to clamp a plurality of fiber optic cables.

In one example, the clamping structure comprises two deformable elements, each of the deformable elements being fixedly or removably attached to a respective jaw. A plurality of fiber optic cables may be spaced apart within the clamping structure so that each individual fiber optic cable within the plurality of fiber optic cables is in contact only with the deformable element, or the deformable element and the jaw, and thus not in contact with each other.

In another example, the deformable element is formed by three deformable elements arranged to receive a plurality of deformable elements. The three deformable elements are arranged so that two of the deformable elements are in connection with a respective jaw, and the third deformable element is layered between the other two deformable elements. The plurality of fiber optic cables may be spaced apart between both layers of deformable element, such that each individual fiber optic cable is in contact with the deformable element, and so that the middle layer of the deformable element is in contact with the other two deformable elements.

Arranging multiple fiber optic cables within the same clamping structure may be particularly advantageous when working with limited space.

According to a second aspect of the present disclosure, there is provided a system comprising a fiber optic cable, and at least two device chassis, between which the fiber optic cable is connected, and a clamping structure according to the present disclosure electrically connected to a controlled potential of a device chassis of the at least two device chassis.

A device chassis may be understood as chassis of electrical units between which the fiber optic cables is connected in order to transfer information or signals.

The clamping structure may be arranged anywhere along the fiber optic cable. The clamping structure may preferably be arranged in a proximity to a device chassis so that an electrical connection between the clamping structure and the device chassis can be more easily established.

In a particular example, the clamping structure may be mounted to a device chassis via a mounting connection. The mounting connection may form an electrical connection to the device chassis.

### BRIEF DESCRIPTION OF THE DRAWINGS

Aspects of the present disclosure will be described, by way of example only, and with reference to the following figures, in which:
Figure 1A schematically illustrates a front view of a clamping structure according to an aspect of the present disclosure;
Figure 1B schematically illustrates a side view of the clamping structure shown in figure 1A;
Figure 2A schematically illustrates a clamping structure according to an aspect of the present disclosure, wherein the jaws are in an open state;
Figure 2B schematically illustrates the clamping structure shown in figure 2A, wherein the jaws are in a clamped state;
Figure 3A schematically illustrates a clamping structure according to an aspect of the disclosure, wherein the jaws are in an open state;
Figure 3B schematically illustrates the clamping structure shown in figure 3A, wherein the jaws are in a clamped state;
Figure 4 schematically illustrates an aspect of the present disclosure, wherein a plurality of fiber optic cables are clamped by the clamping structure;
Figure 5A schematically illustrates a clamping structure according to an aspect of the present disclosure, wherein one of the opposed jaws is formed as a part of a device chassis;
Figure 5B schematically illustrates a clamping structure according to an aspect of the present disclosure, wherein the pair of opposed jaws are formed as a part of a device chassis;
Figure 6 schematically illustrates a system comprising a clamping structure according to the present disclosure.

### DETAILED DESCRIPTION

As illustrated in the figures, the size of elements and regions may be exaggerated for illustrative purpose and, thus, are provided to illustrate the general structures of the embodiments. Unless otherwise indicated, like reference numerals refer to like elements throughout.

Exemplifying embodiments will now be described more fully hereinafter with reference to the accompanying drawings, in which some embodiments of the present disclosure are shown. The present disclosure may, however, be embodied in many different forms and should not be construed as limited to the embodiments set forth herein; rather, these embodiments are provided for thoroughness and completeness, and fully convey the scope of the disclosure to the skilled person.

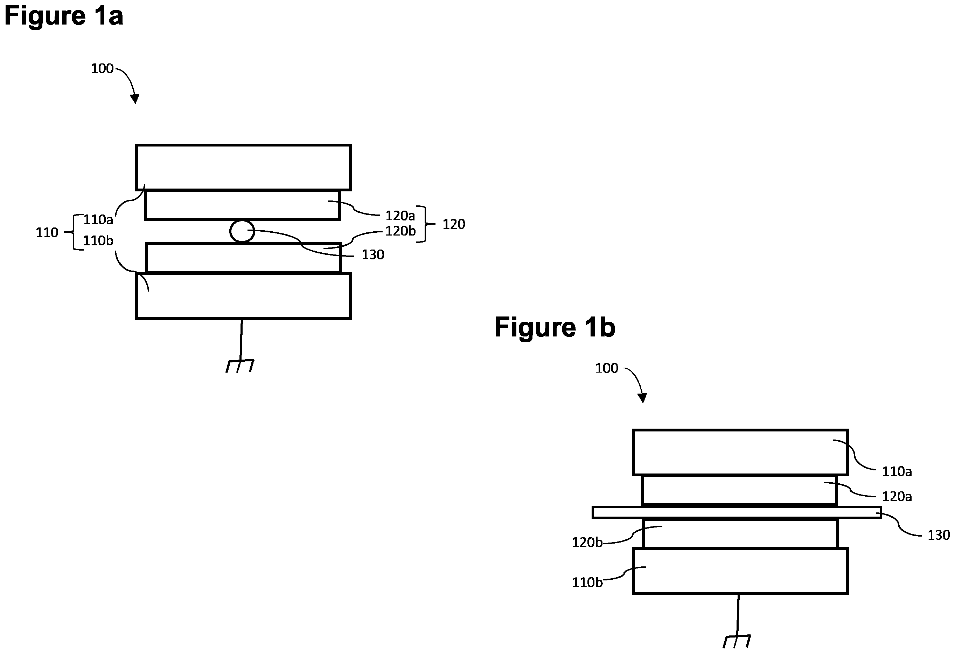

Figure 1A schematically illustrates a front view of a clamping structure 100 according to one aspect of the present disclosure. The clamping structure 100 comprises a pair of opposed jaws 110a, 110b, illustrated in their open state. The clamping structure 100 further comprises an electrically conductive deformable element 120, formed as two deformable elements 120a and 120b, arranged between the pair of opposed jaws 110a, 110b. The deformable element 120a is attached to the jaw 110a, and the deformable element 120b is attached to the jaw 110b. The deformable elements 120a, 120b may be attached to the jaws 110a, 110b by force applied by the jaws 110, adhesive or conductive fasteners, depending on the implementation.

One of the opposed jaws, 110b in the illustrated example, is configured to be connected to a controlled potential, e.g., chassis ground, protective ground, or any other type of controlled potential. In an alternative example, both jaws may be configured to be electrically connected to the controlled potential.

Between the two deformable elements 110a, 110b is a fiber optic cable 130. In the open state of the opposed jaws 110a, 110b, the deformable elements 120a, 120b will be spaced apart enough to receive the fiber optic cable 130 therebetween. As force is applied in the closed state of the jaws 110a, 110b, the jaws 110a, 110b push the deformable elements 120a, 120b towards each other. Thus, the deformable element 120 (i.e., formed as the two parts 120a and 120b) will, due to its elasticity, deform to fill the space between the jaws 110a, 110b, and thus sandwich or hold the fiber optic cable 130 in place.

In figure 1A, it can be seen that the fiber optic cable will be sandwiched between the jaws 110a, 110b and the deformable elements 120a, 120b when the jaws 110a, 110b are in the clamped state. That is, the deformable elements 120a, 120b may partly or fully surround the fiber optic cable 130, thereby ensuring a good electrical connection between the fiber optic cable 130 shell and the deformable element 120a, 120b. Electric current leaking on the outer surface of the fiber optic cable 130 (also referred to as 'leakage current') will thus be advantageously redirected to flow through the electrically conductive deformable element 120a, 120b, and the jaw 110b, to the controlled potential connected to the jaw 110b, and thus be terminated.

Figure 1B schematically illustrates a side view of the clamping structure 100 illustrated in figure 1A. When force is applied, the opposed jaws 110a, 110b will push on the electrically conductive deformable element 120a, 120b, causing it to deform around the fiber optic cable 130 and thereby sandwich the fiber optic cable 130.

In one embodiment, both jaws 110a, 110b move towards each other in the clamped state. In another embodiment, one of the opposed jaws is stationary, and the other is moveable.

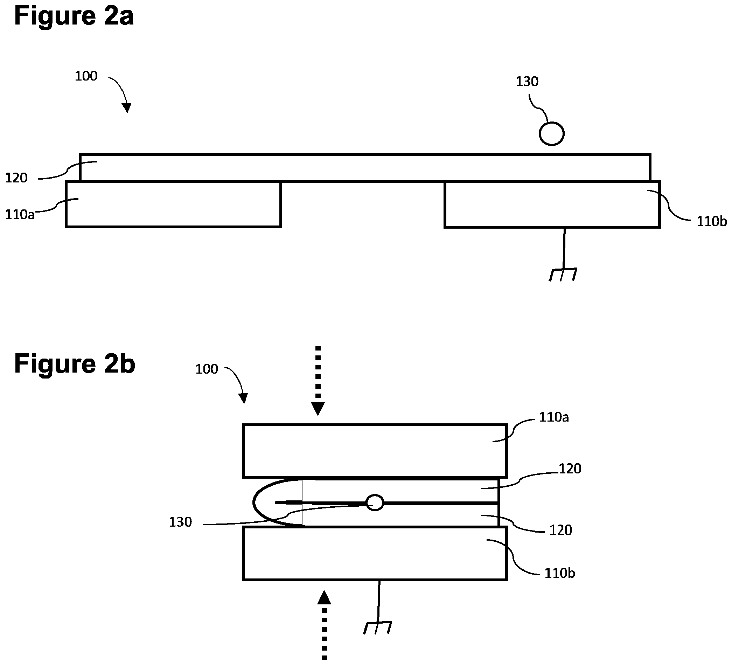

Figure 2A schematically illustrates a clamping structure 100 according to an alternative embodiment of the present disclosure. The clamping structure 100 comprises a pair of opposed jaws 110a, 110b, illustrated in their open state. It will be appreciated that, although the jaws 110a, 110b are not spatially opposed to each other in the open state, the jaws 110a, 110b are nonetheless opposable.

The clamping structure 100 further comprises an electrically conductive deformable element 120. The electrically conductive deformable element 120, in this illustrated example, is formed as one piece, configured to be folded as force is applied by the opposed jaws 110a, 110b, i.e., in a rotational folding motion.

Illustrated in figure 2B is the clamping structure 100 with the opposed jaws 110a, 110b in their closed state. In figure 2B, the arrows illustrates the pushing motion, as the jaws 110a, 110b apply force to the deformable element 120. As the deformable element folds with the force applied by the jaws 110a, 110b, the deformable element 120 will deform around the fiber optic cable 130 and thereby sandwich the fiber optic cable 130.

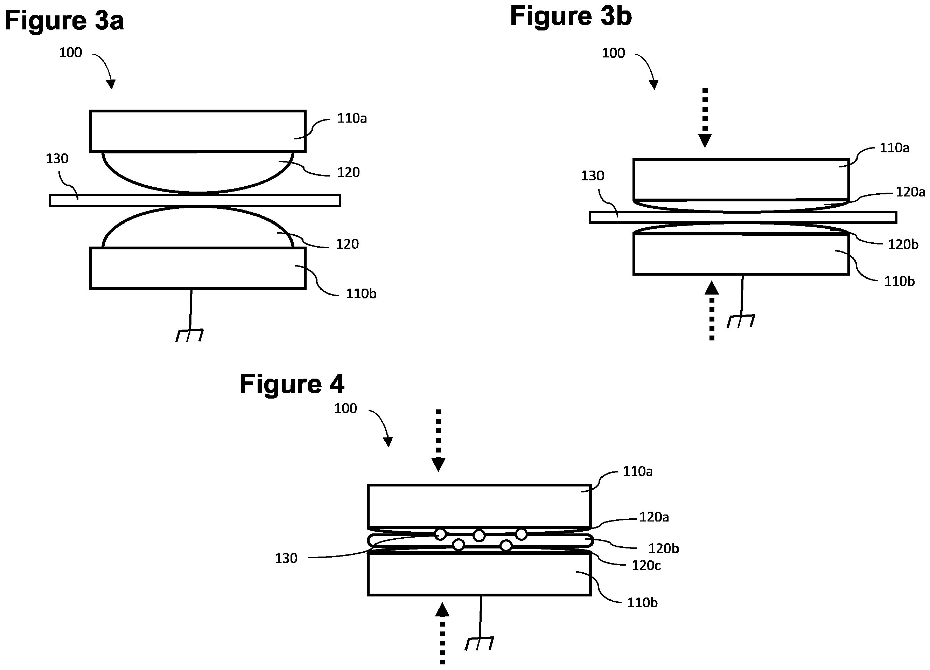

Figures 3A and 3B schematically illustrate a clamping structure 100 according to a further embodiment of the present disclosure, in the open and clamped state of the opposed jaws 110a, 110b, respectively.

The clamping structure 100 as schematically illustrated in figure 3A comprises a electrically conductive deformable element formed as two deformable elements 120a, 120b. As in figure 1A, the deformable elements 120a, 120b are attached to each of the opposed jaws 110a, 110b respectively.

However, in this example, the deformable elements 120a, 120b have a sloped surface forming an apex, and the deformable elements 120a, 120b are arranged in relation to each other so that the apex of the deformable element 120a lines up with the apex of the deformable element 120b. More particularly, each of the deformable elements 120a, 120b is formed as a hemisphere, and the apexes of the hemispheres are arranged in alignment with each other.

The fiber optic cable 130 is arranged between the deformable elements 120a, 120b. Specifically, the fiber optic cable 130 is arranged between the aligned apexes of the deformable elements 120a, 120b such that an increased deforming pressure can be applied between the fiber optical cable 130 and the deformable elements 120a, 120b.

Figure 3B illustrates the jaws 110 in their clamped state. Arrows indicate the force applied by the jaws 110 onto the deformable elements 120a, 120b.

Figure 4 schematically illustrates a clamping device 100 according to an embodiment of the present disclosure, wherein a plurality of fiber optic cables 140 are clamped by the clamping device 100. In the example illustrated in figure 4, there are five fiber optic cables 140 arranged in layers between layers of the electrically conductive deformable element 120. Here, the electrically conductive deformable element 120 is formed as three deformable elements 120a, 120b, 120c layered between the opposed jaws 110.

It will be appreciated that, in other examples, more or fewer fiber optical cables may be arranged in the clamping structure, and/or further layers of the deformable element 120 may be added. In further examples, instead of configuring the deformable element as layers, holes, grooves, channels, or apertures may be provided in the deformable element 120 for receiving one or more spaced apart fiber optic cables 130.

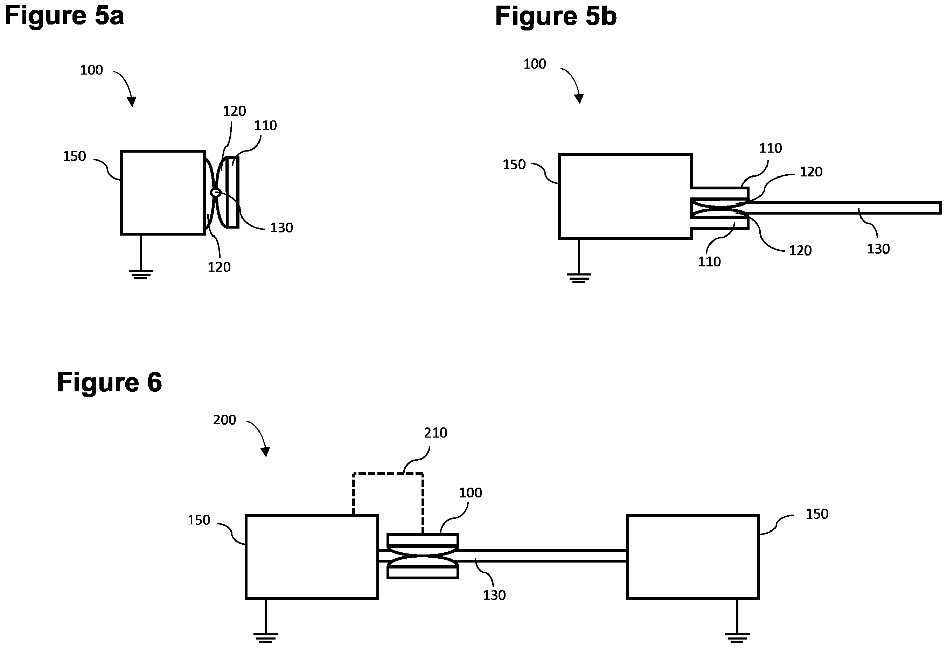

Figure 5a and 5b schematically illustrates a clamping device 100, wherein at least one of the opposed jaws 110 forms part of a device chassis 150.

In figure 5a, one of the opposed jaws form part of a device chassis 150. The electrically conductive deformable element, in this example, is formed as two deformable elements arranged between the device chassis 150 and the jaw 110, in a similar manner as that shown in figures 3A and 3B. According to this example, the jaw 110 will push towards the device chassis, compressing and deforming the deformable element 120 around the fiber optic cable 130, arranged between the deformable elements 120.

The clamping structure is preferably arranged in close proximity to where the optic fiber cable 130 connects to a device chassis. However, it will be appreciated that the clamping structure 100 can be arranged anywhere along the optic fiber cable 130.

A jaw forming part of the device chassis 150 may be interpreted as the jaw being structurally incorporated or connected to the device chassis. Alternatively, in some examples, both jaws may be integrated as part of the device chassis 150.

In figure 5b, such an example is illustrated, wherein both of the opposed jaws 110 form part of a device chassis 150.

Figure 6 schematically illustrates a system 200 according to one aspect of the present invention. The system 200 comprises a clamping structure 100, arranged to clamp a fiber optic cable 130. The fiber optic cable is arranged between two devices 150. The devices are connected to a controlled potential, e.g., ground.

While the present disclosure is susceptible to various modifications and alternative forms, specific embodiments are shown and described above by way of example in relation to the drawings, with a view to clearly explaining the various advantageous aspects of the present disclosure. It should be understood, however, that the detailed description herein and the drawings attached hereto are not intended to limit the disclosure to the particular form disclosed. Rather, the intention is to cover all modifications, equivalents, and alternatives falling within the scope of the following claims.

## Claims

1. A clamping structure, comprising:
a pair of opposed jaws having an open state and a clamped state, and
an electrically conductive deformable element, arranged between the jaws and configured to:
receive a fiber optic cable when the jaws are in the open state; and
deform around and thereby sandwich a fiber optic cable when the jaws are in the clamped state,
wherein the clamping structure is configured to be electrically connected to a controlled potential.

2. A clamping structure according to claim 1, wherein the electrically conductive deformable element is formed as a plurality of deformable elements.

3. A clamping structure, according to claim 2, wherein each of the plurality of deformable elements has a sloped surface forming an apex, and the plurality of deformable elements are arranged such that each respective apex meets when the jaws are in the clamped state.

4. A clamping structure according to any previous claim, wherein at least one of the jaws form part of a device chassis.

5. A clamping structure according to any previous claim, wherein the deformable element has a conductivity at least 10 times higher, and preferably at least 1000 times higher, and even more preferably 100 000 times higher than the fiber optic cables shell.

6. A clamping structure according to any previous claim, wherein the deformable element comprises a metal.

7. A clamping structure according to any previous claim, wherein the deformable element comprises a conductive polymer.

8. A clamping structure according to claim 7, wherein the deformable element comprises a conductive elastomer.

9. A clamping structure according to any of claims 6 to 8, wherein the deformable element comprises a first material for providing electrical conductivity and a second material for providing deformability, and the first material fills, is coated on, or dispersed throughout the second material.

10. A clamping structure according to claim 9, wherein the deformable element comprises a conductive polymer having particles with a higher conductivity than the conductive polymer dispersed throughout.

11. A clamping structure according to any previous claim, wherein the deformable element is held in place between the opposed jaws by one or more of:
force applied by the jaws,
adhesive, or
conductive fasteners.

12. A clamping structure according to any previous claim, wherein the deformable element configured to:
receive a plurality of spaced apart fiber optic cables when the jaws are in the open state; and
deform around and thereby sandwich each of the plurality of spaced apart fiber optic cables when the jaws are in the clamped state.

13. A system, comprising:
a fiber optic cable, and
at least two device chassis, between which the fiber optic cable is connected, and
a clamping structure according to any previous claim electrically connected to a controlled potential of a device chassis of the at least two device chassis.

14. A system according to claim 13, wherein the clamping structure is mounted to a device chassis via a mounting connection.

15. A system according to claim 14, wherein the mounting connection forms an electrical connection to the device chassis.
